# EUROPEAN PATENT APPLICATION

(11) **EP 4 629 524 A1**
(43) Date of publication of application: **08.10.2025**
(21) Application number: 24777585.1
(22) Date of filing: 23.02.2024
(51) Int. Cl.: H04B 7/06

(54) **CHANNEL QUALITY INDICATION METHOD AND APPARATUS**

(30) Priority: 24.03.2023 CN 202310331058
(71) Applicant: ZTE Corporation, Shenzhen, Guangdong 518057 (CN)
(72) Inventor: LI, Yong, Shenzhen, Guangdong 518057 (CN); LU, Zhaohua, Shenzhen, Guangdong 518057 (CN); ZHENG, Guozeng, Shenzhen, Guangdong 518057 (CN); LI, Lun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/078416
(87) International publication number: WO 2024/198795

(57) **Abstract**

Disclosed are a channel quality indication method and apparatus. The channel quality indication method comprises: a first communication node sends a channel quality indicator to a second communication node, and correspondingly, the second communication node receives the channel quality indicator from the first communication node, wherein the channel quality indicator comprises a first indicator and a second indicator, and the first indicator is used for indicating the channel quality matched with a reference precoding matrix.

## Description

The present disclosure claims a priority to Chinese Patent Application No. 202310331058.3, and filed on March 24, 2023, the entire content of which is incorporated into the present application by reference.

### TECHNICAL FIELD

The present disclosure relates to the field of communication technologies, and in particular, to a channel quality indication (Channel Quality Indicator, CQI) method and apparatus.

### BACKGROUND

For the fifth generation (5^{th} generation) communication system, a base station sends a reference signal to a terminal, and the terminal measures the reference signal to determine channel state information from the base station to the terminal. The terminal, after determining the channel state information, reports the channel state information to the base station.

### SUMMARY

In an aspect, a channel quality indication method is provided, and is applied to a first communication node. The channel quality indication method includes: sending a channel quality indicator to a second communication node, where the channel quality indicator includes a first indicator and a second indicator, and the first indicator is used to indicate a channel quality matched with a reference precoding matrix.

In another aspect, a channel quality indication method is provided, and is applied to a second communication node. The channel quality indication method includes: receiving a channel quality indicator from a first communication node, where the channel quality indicator includes a first indicator and a second indicator, and the first indicator is used to indicate a channel quality matched with a reference precoding matrix.

In yet another aspect, a channel quality indication apparatus is provided. The channel quality indication apparatus includes: a sending unit, configured to send a channel quality indicator to a second communication node, where the channel quality indicator includes a first indicator and a second indicator, and the first indicator is used to indicate a channel quality matched with a reference precoding matrix.

In yet another aspect, a channel quality indication apparatus is provided. The channel quality indication apparatus includes: a receiving unit, configured to receive a channel quality indicator from a first communication node, where the channel quality indicator includes a first indicator and a second indicator, and the first indicator is used to indicate a channel quality matched with a reference precoding matrix.

In yet another aspect, a channel quality indication apparatus is provided. The channel quality indication apparatus may implement the above-mentioned functions in various aspects, and the functions may be implemented by hardware. In an embodiment, the channel quality indication apparatus may include: a processor and a communication interface, and the processor may be configured to support the apparatus to implement the functions involved in any one of the above aspects, for example: the processor sends a channel quality indicator by the communication interface.

In an embodiment, the channel quality indication apparatus may further include a memory, and the memory is configured to store computer-executed instructions and data necessary for the apparatus. When the apparatus is running, the processor executes the computer-executed instructions stored in the memory, so that the channel quality indication apparatus performs the channel quality indication method described in any one of the above aspects.

In yet another aspect, a computer readable storage medium is provided. The computer readable storage medium may be a readable non-volatile storage medium, the computer readable storage medium stores computer instructions or a program, and the computer instructions or the program, when executed on a computer, cause the computer to perform the channel quality indication method described in any one of the above aspects.

In yet another aspect, a computer program product containing instructions is provided, and the instructions, when executed on a computer, cause the computer to perform the channel quality indication method described in any one of the above aspects.

### BRIEF DESCRIPTION OF THE DRAWINGS

FIG. 1 is a structural schematic diagram of a communication system according to some embodiments.
FIG. 2 is a structural schematic diagram of a channel quality indication apparatus according to some embodiments.
FIG. 3 is a schematic diagram of a channel quality indication method according to some embodiments.
FIG. 4 is a schematic diagram of another channel quality indication method according to some embodiments.
FIG. 5 is a structural schematic diagram of another channel quality indication apparatus according to some embodiments.
FIG. 6 is a structural schematic diagram of yet another channel quality indication apparatus according to some embodiments.

### DETAILED DESCRIPTION

In order to enable those skilled in the art to better understand the technical solutions of the embodiments of the present disclosure, the technical solutions in the embodiments of the present disclosure will be described clearly and completely below with reference to the drawings in the embodiments of the present disclosure.

In the description of the present disclosure, unless otherwise stated, the character "/" means "or". For example, "A/B" may mean A or B. Herein, "and/or" merely describes an association relationship of associated objects, and means that there are three kinds of relationships; for example, A and/or B may mean three cases: only A, only B, and both A and B. In addition, "at least one" means one or more, and "a/the plurality of / multiple / more" means two or more. Words, such as "first" and "second", etc., do not limit the quantity and execution order, and the words, such as "first" and "second", etc., also do not necessarily limit different items. "At least a/one (item) of" or similar expressions refer to any combination of these items, including a single one (item) or any combination of plural ones (items). For example, at least one (item) of a, b, or c may mean: only a, only b, only c, both a and b, both a and c, both b and c, or all of a and b and c, where a number of a, b and c may be single or multiple.

It should be noted that in the present disclosure, the words such as "exemplary/exemplarily" or "for example", etc., are used to present an example, illustration, or explanation. Any embodiment or design solution described with "exemplary/exemplarily" or "for example" in the present disclosure should not be construed as preferred or advantageous over other embodiments or design solutions. Rather, the use of the words such as "exemplary/exemplarily" or "for example", etc., is intended to present relevant concepts in a specific manner.

In the embodiments of the present disclosure, "indication" or its variants may include a direct indication and an indirect indication. For example, by taking indication information in the following as an example, the indication information may directly carry information A itself or its index, to achieve a purpose of directly indicating the information A. Alternatively, the indication information may also carry information B having an associated relationship with the information A, thereby achieving the purpose of indirectly indicating the information A while indicating the information B.

In the wireless communication technology, the long-term evolution (Long Term Evolution, LTE) technology in the fourth generation wireless communication technology and the new radio (New Radio, NR) technology in the fifth generation wireless communication technology are technologies based on orthogonal frequency division multiplexing (Orthogonal Frequency Division multiplexing, OFDM).

In the OFDM technology, a smallest frequency domain unit is a subcarrier, and a smallest time domain unit is an OFDM symbol. In an example, in order to facilitate the use of frequency domain resources, a resource block (Resource Block) and a bandwidth part (Bandwidth Part, BWP) are defined. A resource block is defined as a specific number of continuous subcarriers. A bandwidth part is defined as another specific number of continuous resource blocks on a carrier. In another example, a slot is defined for the convenience of using time domain resources. A slot is defined as another specific number of continuous OFDM symbols.

In some scenarios, by taking an example in which a base station needs to transmit data to a terminal, the base station needs to determine a scheduling strategy for transmitting data from the base station to the terminal based on a channel quality of a downlink channel (or referred to as a downlink channel quality) between the base station and the terminal. Therefore, in order to determine the downlink channel quality between the base station and the terminal, the base station may send a reference signal (or referred to as a downlink reference signal) to the terminal, and the terminal receives and measures the reference signal, to determine channel state information for indicating the channel quality between the base station and the terminal. The terminal reports the channel state information to the base station. In this way, the base station may determine the channel quality between the base station and the terminal according to a channel state indicated by the channel state information that is received. Furthermore, the base station may determine a strategy for a data transmission according to the channel quality, and transmit data according to the strategy, thereby improving the efficiency of the data transmission.

The reference signal sent by the base station may be alternatively described as a downlink reference signal.

In an example, in the LTE system, the downlink reference signal may include a cell-specific reference signal (Cell-specific Reference Signal, CRS), a channel state information reference signal (Channel-state Information Reference Signal, CSI-RS).

In another example, in the NR system, the downlink reference signal may include a CSI-RS.

The CSI-RS may be carried by a channel state information reference signal resource (CSI-RS resource). The channel state information reference signal resource is composed of code division multiplexing (Code Division Multiplexing, CDM) groups. A CDM group is composed of radio resource elements. CSI-RSs of a group of CSI-RS ports is multiplexed thereon by code division multiplexing.

The accuracy of the channel state indicated by the channel state information affects the strategy for the data transmission of the base station, and then affects the efficiency of transmitting data from the base station to the terminal.

In an example, the channel state information may include a CQI or a precoding matrix indicator (Pre-coding Matrix Indicator, PMI). The CQI may be used to indicate a channel quality between the base station and the terminal. The PMI may be used to indicate a precoding matrix applied to an antenna of the base station.

In the channel state information, a reporting format of the CQI may include Format 1 and Format 2 in the following, and a reporting format of the PMI may include Format 3, Format 4, and Format 5 in the following.

Format 1, the reporting format of the CQI may be wideband CQI reporting. That is, the terminal reports a CQI for indicating a channel quality by a channel state information reporting frequency band (CSI reporting frequency band). The channel quality indicated by the CQI corresponds to the entire channel state information reporting frequency band.

Format 2, the reporting format of the CQI may be sub-band CQI reporting. That is, the terminal, when reporting the CQI by the channel state information reporting frequency band, may report the CQI in units of sub-bands.

In Format 2, a channel quality corresponds to a sub-band. That is, the channel state information reporting frequency band includes sub-bands, and each sub-band corresponds to a channel quality. A sub-band is a frequency domain unit, and may be defined as N continuous resource blocks (RB), where N is a positive integer. For convenience of description, in the embodiments of the present disclosure, the sub-band may be referred to as a channel quality indication sub-band, or referred to as a CQI sub-band, or referred to as a subband. N is referred to as a size of the CQI sub-band, or referred to as a CQI sub-band size, or as a sub-band size. The BWP may be divided into sub-bands, and the channel state information reporting frequency band (CSI reporting frequency band) may be defined by a subset of the sub-bands of the BWP, for example, the channel state information reporting frequency band may be sub-bands of which channel state information needs to be reported, among the sub-bands of the BWP.

Based on the above two reporting formats of the CQI, a method for the terminal to determine the channel quality may include: determining the channel quality according to a strength of a reference signal that is received by the terminal and/or determining the channel quality according to a signal to interference plus noise ratio (SINR) of a reference signal that is received.

It should be noted that, if the channel quality on the channel state information reporting frequency band does not change much, the terminal may report the CQI by the wideband CQI reporting. This reporting may reduce the resource overhead for CQI reporting. If the channel quality varies widely in the frequency domain, the terminal may report the CQI by the sub-band CQI reporting. This reporting may increase the accuracy of the CQI reporting.

Format 3, a reporting format of the PMI may be broadband PMI reporting. That is, the terminal may report a PMI by the channel state information reporting frequency band. The PMI corresponds to the entire channel state information reporting frequency band.

Format 4, a reporting format of the PMI may be sub-band PMI reporting. That is, the terminal may report a PMI by each sub-band of the channel state information reporting frequency band, or report a component of a PMI by each sub-band of the channel state information reporting frequency band.

For example, the PMI is composed of two parts: X1 and X2, and the terminal may report an X1 and X2 of a PMI by each sub-band of the channel state information reporting frequency band. For example, the terminal may report an X1 by the entire channel state information reporting frequency band and report an X2 by each sub-band. For another example, the terminal may report an X1 and an X2 by each sub-band.

Format 5, a reporting format of the PMI is that: the reported PMI indicates R precoding matrices for each sub-band, where R is a positive integer. In terms of a frequency domain granularity for feeding back the precoding matrix, R may also represent a number of precoding matrices included in each sub-band, or a number of precoding matrices included in each CQI sub-band.

In some examples, by taking an example in which a data transmission is performed between the base station and the terminal, it is assumed that the base station may use a precoding matrix to send a signal or data to the terminal by a radio channel. Based on this assumption, the terminal may calculate the CQI by using the assumed precoding matrix. For convenience of description, the calculated CQI is referred to as a reference CQI, and the used precoding matrix is referred to as a reference precoding matrix. The terminal may report information of the reference precoding matrix and information of the reference CQI to the base station. The base station may recover the precoding matrix from the information of the reference precoding matrix that is received (for the convenience of description later, the recovered precoding matrix may be referred to as a reconstructed precoding matrix), and recover the CQI from the information of the reference CQI that is received (for the convenience of description later, the recovered CQI may be referred to as a reconstructed CQI). In this way, the base station may determine a scheduling strategy for a signal transmission or data transmission based on the reconstructed precoding matrix and the reconstructed CQI, and send the signal or data to the terminal according to the scheduling strategy.

However, in some scenarios, there may be a problem that the reconstructed precoding matrix is not matched with the reconstructed CQI, and thus, the scheduling strategy for the signal transmission or data transmission determined based on the reconstructed precoding matrix and the reconstructed CQI is inappropriate, resulting in a poor data transmission performance of the communication system.

For example, the transmitted information of the reference precoding matrix cannot completely describe the reference precoding matrix, so that the reconstructed precoding matrix is different from the reference precoding matrix.

For another example, the information of the reference precoding matrix received by the base station is different from the transmitted information of the reference precoding matrix. For example, a part of the information of the reference precoding matrix is lost during a transmission process. For another example, a part of the transmitted information of the reference precoding matrix is lost due to compression. For another example, a part of the information of the reference precoding matrix is lost due to information conversion in the transmission process.

For another example, the base station cannot completely recover the reference precoding matrix from the received information of the reference precoding matrix; for example, a parsing function of the base station is limited, or certain parsing errors occur.

Each of the above reasons may lead to a mismatch between the reconstructed precoding matrix and the reconstructed CQI.

In view of this, the embodiments of the present disclosure provide a channel quality indication method, and in the method, a channel quality is indicated by a channel quality indicator including a first indicator and a second indicator. The first indicator may be used to indicate a channel quality matched with a reference precoding matrix. In this way, a first communication node may indicate the CQI by a plurality of parts, such as the first indicator and the second indicator, thereby improving the accuracy of the channel quality indicator and reducing system complexity. Thereby, the data transmission performance of the communication system is improved.

It should be noted that, the technical solutions provided in the embodiments of the present disclosure may be applied to various communication systems, for example, an NR communication system using the 5G communication technology, a future evolution system, or a multi-communication fusion system.

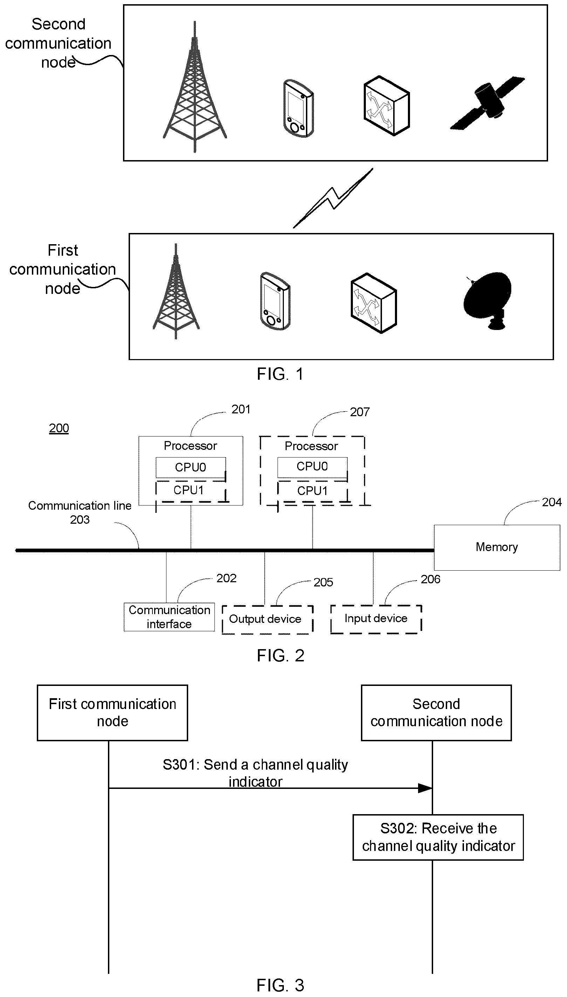

Exemplarily, FIG. 1 shows a structural schematic diagram of a communication system, provided in the embodiments of the present disclosure. The communication system may include a second communication node and a first communication node. The first communication node may be communicatively connected with the second communication node. For example, the first communication node may be communicatively connected with the second communication node by a radio channel.

The first communication node may also be referred to as a signal receiving end. The first communication node may measure a channel quality between the first communication node and the second communication node, and report a channel quality indicator (or referred to as channel state information) for indicating the channel quality to the second communication node.

The second communication node may be referred to as a signal sending end. The second communication node may transmit a signal or data through a radio channel, by using a precoding matrix based on a plurality of antennas.

In some application scenarios, the first communication node may be a terminal, and the second communication node may be a base station. Alternatively, the first communication node and the second communication node are both base stations, or the first communication node and the second communication node are both terminals.

In some other application scenarios, the first communication node may be a terminal, and the second communication node may be a wireless router. Alternatively, the first communication node is a repeater and the second communication node is a base station. Alternatively, the first communication node is a terminal and the second communication node is a repeater. Alternatively, the first communication node and the second communication node are both repeaters.

In some other application scenarios, the first communication node is a base station and the second communication node is a satellite. Alternatively, the first communication node is a satellite, and the second communication node is a base station. Alternatively, the first communication node is a terminal and the second communication node is a satellite. Alternatively, the first communication node is a satellite and the second communication node is a terminal.

In some other application scenarios, the first communication node is a ground device, and the second communication node is an aircraft. Alternatively, the first communication node and the second communication node are both aircrafts.

When the above communication node is a base station, the communication node may also be a network device, or a device with a function of a network device. The communication node may be used to implement functions, such as resource scheduling, radio resource management, and radio access control, etc., of terminal devices. Specifically, the communication node may be any one of a small base station, a radio access point, a receiving and sending point (transmission receive point, TRP), a transmission point (TP), and some other access nodes.

When the above communication node is a terminal, the communication node may also be a device with a function of a terminal. The terminal may also be referred to as a terminal device, a user equipment (UE), a mobile station, a mobile terminal, etc. The terminal may be a mobile phone, a tablet computer, a computer with a radio transceiver function, a virtual reality terminal device, an augmented reality terminal device, a wireless terminal in industrial control, a wireless terminal in unmanned driving, a wireless terminal in remote surgery, a wireless terminal in transportation safety, a wireless terminal in a smart city, a wireless terminal in a smart home, etc. The embodiments of the present disclosure do not limit the device form adopted by the terminal.

It should be noted that, FIG. 1 is only an exemplary frame diagram, and a number of nodes and names of the various devices included in FIG. 1 are not limited, and in addition to the functional nodes shown in FIG. 1, the communication system may also include other nodes.

The embodiments of the present disclosure do not limit the application scenarios. The system architectures and the service scenarios described in the embodiments of the present disclosure are provided for more clearly explaining the technical solutions of the embodiments of the present disclosure, and do not constitute a limitation on the technical solutions provided in the embodiments of the present disclosure, and the ordinary skilled in the art may know that with the evolution of the network architectures and the emergence of new service scenarios, the technical solutions provided in the embodiments of the present disclosure are also applicable to similar technical problems.

In some embodiments, the devices in FIG. 1 may each adopt the composition structures shown in FIG. 2, or include the components shown in FIG. 2. FIG. 2 is a schematic diagram of components of a channel quality indication apparatus 200 provided in the embodiments of the present disclosure, and the channel quality indication apparatus 200 may be the second communication node or a chip or a system on chip in the second communication node. Alternatively, the channel quality indication apparatus 200 may be the first communication node or a chip or a system on chip in the first communication node. As shown in FIG. 2, the channel quality indication apparatus 200 includes a processor 201, a communication interface 202, and a communication line 203.

Furthermore, the channel quality indication apparatus 200 may also include a memory 204. The processor 201, the memory 204 and the communication interface 202 may be connected by the communication line 203.

The processor 201 is a central processing unit (CPU), a general-purpose processor, a network processor (NP), a digital signal processor (DSP), a microprocessor, a microcontroller, a programmable logic device (PLD), or any combination thereof. The processor 201 may also be other apparatuses with processing functions, such as a circuit, a device or a software module, which is not limited thereto.

The communication interface 202 is configured to communicate with other devices or other communication networks. The other communication networks may be the Ethernet, radio access network (RAN), wireless local area network (WLAN), etc. The communication interface 202 may be a module, a circuit, a communication interface, or any apparatus capable of implementing communication.

The communication line 203 is configured to transfer information between the components included in the channel quality indication apparatus 200.

The memory 204 is configured to store instructions. Herein, the instructions may be a computer program.

The memory 204 may be a read-only memory (ROM) or other types of static storage devices that may store static information and instructions, or a random access memory (RAM) or other types of dynamic storage devices that may store information and instructions, or may also be an electrically erasable programmable read-only memory (EEPROM), a compact disc read-only memory (CD-ROM) or other optical disc storages, optical disc storages (including a compact optical disc, a laser disc, an optical disc, a digital versatile disc, a Blu-ray disc, or the like), a magnetic disk storage medium or other magnetic storage devices, etc., which is not limited thereto.

It should be noted that, the memory 204 may exist independently of the processor 201, or may be integrated with the processor 201. The memory 204 may be configured to store instructions or program codes or some data, etc. The memory 204 may be located inside the channel quality indication apparatus 200 or outside the channel quality indication apparatus 200, which is not limited thereto. The processor 201 is configured to execute the instructions stored in the memory 204 to implement the method for determining an antenna parameter provided in the following embodiments of the present disclosure.

In an example, the processor 201 may include one or more CPUs, e.g., CPU0 and CPU1 in FIG. 2.

In an embodiment, the channel quality indication apparatus 200 includes a plurality of processors, and for example, in addition to the processor 201 in FIG. 2, a processor 207 may also be included.

In an embodiment, the channel quality indication apparatus 200 further includes an output device 205 and an input device 206. Exemplarily, the input device 206 is a device such as a keyboard, a mouse, a microphone or a joystick, etc., and the output device 205 is a device such as a display screen and a speaker, etc.

It should be noted that, the channel quality indication apparatus 200 may be a desktop computer, a portable computer, a network server, a mobile phone, a tablet computer, a wireless terminal, an embedded device, a chip system or a device with similar structures as shown in FIG. 2. In addition, the component structures shown in FIG. 2 do not constitute a limitation on the various devices in FIG. 1 and FIG. 2, and in addition to the components shown in FIG. 2, the various devices in FIG. 1 and FIG. 2 may include more or fewer components than shown in the figures, or combine certain components, or include different component arrangements.

In the embodiments of the present disclosure, the chip system may be formed by a chip, or may also include a chip and other discrete devices.

In addition, actions, terms, etc., involved between the various embodiments of the present disclosure may refer to each other, which are not limited thereto. In the embodiments of the present disclosure, message names or parameter names in messages interacted between the various devices, etc., are only examples, and other names may also be adopted, which are not limited thereto.

The channel quality indication method provided in the embodiments of the present disclosure is described below in conjunction with the communication system shown in FIG. 1. The actions, terms, etc., involved between the various embodiments of the present disclosure may refer to each other, which are not limited thereto. In the embodiments of the present disclosure, message names or parameter names in messages interacted between the various devices, etc., are only examples, and other names may also be adopted, which are not limited thereto. The actions involved in the various embodiments of the present disclosure are only examples, and other names may also be adopted, for example: "included/comprised in/on/within" described in the embodiments of the present disclosure may also be replaced by "carried on" or "carried in", etc.

FIG. 3 is a channel quality indication method, provided in the embodiments of the present disclosure. As shown in FIG. 3, the method may include the following contents.

S301, a first communication node sends a channel quality indicator to a second communication node.

The first communication node may be the first communication node in FIG. 1, or a device of the first communication node in FIG. 1, such as a chip or a system on chip. The second communication node may be the second communication node in FIG. 1, or a device of the second communication node in FIG. 2, such as a chip or a system on chip.

In the embodiments of the present disclosure, the channel quality indicator may also be referred to as channel quality indication information, channel quality information, channel quality state information, a CQI, or other names.

The channel quality indicator may be used to indicate a channel quality of a channel (or referred to as a downlink channel) between the first communication node and the second communication node, and is obtained by the first communication node by measuring a reference signal (or referred to as a downlink reference signal) assuming that the second communication node sends data by a precoding matrix. For example, the channel quality indicator may be represented or characterized as a signal to interference plus noise ratio (SINR) of a reference signal. For example, the channel quality indicator may be the SINR of the reference signal, or a metric value based on the SINR. For another example, the channel quality indicator may be represented or characterized as reference signal received power (RSRP). For example, the channel quality indicator may be the RSRP, or a metric value based on the RSRP. For another example, the channel quality indicator may be represented or characterized as a reference signal received quality (RSRQ), or a metric value based on the RSRQ. Of course, the channel quality indicator may also be represented or characterized as other channel quality parameters or metric values based on other channel quality parameters, which is not limited thereto.

In an example, in order to improve a matching degree between the reconstructed precoding matrix and the reconstructed CQI, the channel quality indicator may be composed of a first indicator and a second indicator, for example, the channel quality indicator may include the first indicator and the second indicator, or the channel quality indicator is determined according to the first indicator and a second indicator.

In an example, the channel quality indicator, the first indicator, and the second indicator may satisfy at least one of the following relationships 1-1 to 1-5.

1-1, a value of the channel quality indicator may be determined according to a sum of a value of the first indicator and a value of the second indicator.

For example, the value of the channel indicator may be the sum of the value of the first indicator and the value of the second indicator. For another example, the value of the channel quality indicator may be determined as a value with a correspondence to the sum of the value of the first indicator and the value of the second indicator, that is, there is a correspondence of the value of the channel quality indicator to the sum of the value of the first indicator and the value of the second indicator. The correspondence may be a linear relationship or a functional relationship, which is not limited thereto.

1-2, a value of the channel quality indicator may be determined according to a difference between a value of the first indicator and a value of the second indicator.

The value of the first indicator may be a minuend, and the value of the second indicator may be a subtrahend. Of course, the value of the first indicator may also be a subtrahend, and the value of the second indicator may be a minuend, which is not limited thereto.

For example, the value of the channel quality indicator may be determined according to the difference between the value of the first indicator and the value of the second indicator. For another example, the value of the channel quality indicator may be determined as a value with a correspondence to the difference of the value of the first indicator and the value of the second indicator, that is, there is a correspondence of the value of the channel quality indicator to the difference of the value of the first indicator and the value of the second indicator. The correspondence may be a linear relationship or a functional relationship, which is not limited thereto.

1-3, the channel quality indicated by the channel quality indicator may be determined according to a product of a value of the first indicator and a value of the second indicator.

For example, the value of the channel quality indicator may be the product of the value of the first indicator and the value of the second indicator. For another example, the value of the channel quality indicator may be determined as a value with a correspondence to the product of the value of the first indicator and the value of the second indicator, that is, there is a correspondence of the value of the channel quality indicator to the product of the value of the first indicator and the value of the second indicator. The correspondence may be a linear relationship or a functional relationship, which is not limited thereto.

1-4, the channel quality indicated by the channel quality indicator may be determined according to a quotient of a value of the first indicator and a value of the second indicator.

The value of the first indicator may be a dividend, and the value of the second indicator may be a divisor. Of course, the value of the first indicator may also be a divisor, and the value of the second indicator may be a dividend, which is not limited thereto.

For example, the value of the channel quality indicator may be a quotient of the value of the first indicator and the value of the second indicator. For another example, the value of the channel quality indicator may be determined as a value with a correspondence to the quotient of the value of the first indicator and the value of the second indicator, that is, there is a correspondence of the value of the channel quality indicator to the quotient of the value of the first indicator and the value of the second indicator. The correspondence may be a linear relationship or a functional relationship, which is not limited thereto.

1-5, the channel quality indicated by the channel quality indicator may be determined according to a modulus of a value of the first indicator and a value of the second indicator.

The value of the first indicator may be a dividend, and the value of the second indicator may be a divisor. Of course, the value of the first indicator may also be a divisor, and the value of the second indicator may be a dividend, which is not limited thereto.

For example, the value of the channel quality indicator may be the modulus of the value of the first indicator and the value of the second indicator. For another example, the value of the channel quality indicator may be determined as a value with a correspondence to the modulus of the value of the first indicator and the value of the second indicator, that is, there is a correspondence of the value of the channel quality indicator to the modulus of the value of the first indicator and the value of the second indicator. The correspondence may be a linear relationship or a functional relationship, which is not limited thereto.

S302, the second communication node receives the channel quality indicator from the first communication node.

In an example, in a case where the channel quality indicator may include the first indicator and the second indicator, the second communication node may determine a value of the channel quality indicator according to the first indicator and the second indicator.

For example, the second communication node may determine the value of the channel quality indicator according to the value of the first indicator and the value of the second indicator.

In another example, in a case where the channel quality indicator is determined according to the value of the first indicator and the value of the second indicator, the first communication node may determine the value of the channel quality indicator according to the value of the first indicator and the value of the second indicator, and send the value of the channel quality indicator to the second communication node. In this way, the second communications node may determine the value of the channel indicator.

Based on the technical solutions of FIG. 3, a format of the channel quality indicator is defined, and for example, the channel quality indicator may include a first indicator and a second indicator. The first indicator is used to indicate a channel quality matched with a reference precoding matrix. In this way, the first communication node may indicate the CQI by a plurality of parts, such as the first indicator and the second indicator, thereby improving the accuracy of the channel quality indicator and reducing system complexity. Thereby, the data transmission performance of the communication system is improved.

The first indicator and the second indicator in the embodiments of the present disclosure are explained below, respectively.

1. The first indicator, may also be referred to as a first channel quality indicator, or first channel quality information, or may be named by other names, which is not limited thereto.

The first indicator may be used to indicate a channel quality matched with a reference precoding matrix. The first indicator may be obtained by calculating according to the reference precoding matrix.

In an embodiment, it is assumed that the second communication node uses a specific precoding matrix to transmit a signal or data by a radio channel, by a multi-antenna technology. Based on this assumption, the first communication node may calculate the first indicator based on the specific precoding matrix. The specific precoding matrix may be the reference precoding matrix.

In an example, the first communication node may measure a downlink channel quality between the second communication node and the first communication node. Based on the downlink channel quality, the first communication node may determine the reference precoding matrix. For example, it may be based on a correspondence of the reference precoding matrix to the downlink channel quality. The correspondence may be configured by the first communication node by default, or may be configured by the second communication node or a third communication node, which is not limited thereto.

2. The second indicator, may also be referred to as a second channel quality indicator, or second channel quality information, or may be named by other names, which is not limited thereto.

In an example, the second indicator may be determined according to a first matrix and a second matrix.

In an embodiment, the method for determining the value of the second indicator may include Method 1 to Method 6 as follows.

Method 1: the value of the second indicator may be determined according to a similarity metric value between the first matrix and the second matrix.

The first matrix is a first precoding matrix. Furthermore, the first communication node may report information of the first precoding matrix, such as an indicator (PMI) for indicating the first precoding matrix, to the second communication node, so that the second communication node reconstructs the first precoding matrix according to the information of the first precoding matrix reported by the first communication node.

In an example, one of the first matrix and the second matrix may be used as the reference precoding matrix described above, for example, the first matrix is the reference precoding matrix, that is, the first precoding matrix is the reference precoding matrix, or the second matrix is the reference precoding matrix.

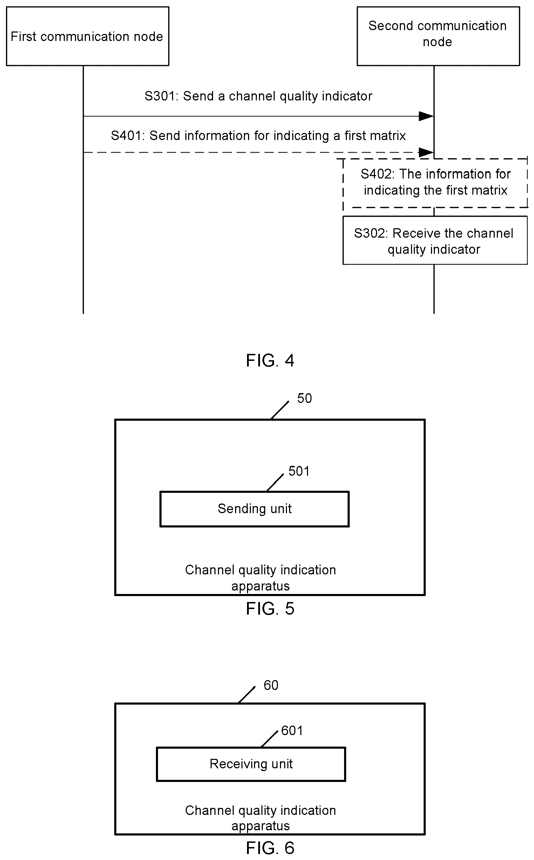

The second matrix may be a matrix determined by the first communication node. For example, the second matrix may be determined according to the first matrix, or configured for the first communication node by the second communication node or a third communication node, or configured by the first communication node by default, or determined from a candidate matrix set by the first communication node. Specifically, reference may be made to the description of the embodiment in FIG. 4 below, which will not be repeated herein. The third communication node is different from the first communication node and the second communication node. The third communication node may refer to the description of the first communication node or the second communication node in FIG. 1, which will not be repeated.

In an embodiment, the value of the second indicator may be a similarity metric value between the first matrix and the second matrix.

The similarity metric value between the first matrix and the second matrix may also be referred to as a metric value of a similarity between the first matrix and the second matrix.

The similarity metric value between the first matrix and the second matrix may be positively proportional to or negatively proportional to the similarity between the first matrix and the second matrix.

In an example, in a case where the similarity metric value between the first matrix and the second matrix is positively proportional to the similarity between the first matrix and the second matrix, the similarity metric value between the first matrix and the second matrix may be represented as a distance between the first matrix and the second matrix. The distance may be a first norm distance, a second norm distance, a chord distance, or the like.

In another example, in a case where the similarity metric value between the first matrix and the second matrix is negatively proportional to the similarity between the first matrix and the second matrix, the similarity metric value between the first matrix and the second matrix may be a projection value between the first matrix and the second matrix, an inner product between the first matrix and the second matrix, a cosine similarity between the first matrix and the second matrix, or the power of the cosine similarity between the first matrix and the second matrix, etc.

It should be noted that, in the embodiments of the present disclosure, in a case where the similarity metric value between matrices is negatively proportional to the similarity between the matrices, the similarity between the matrices being higher than a threshold may be replaced by the similarity metric value between the matrices being less than a threshold, and the similarity between the matrices being lower than a threshold may be replaced by the similarity metric value between the matrices being greater than a threshold.

In a case where the similarity metric value between matrices is positively proportional to the similarity between the matrices, the similarity between the matrices being higher than a threshold is replaced by the similarity metric value between the matrices being greater than a threshold, and the similarity between the matrices being lower than a threshold is replaced by the similarity metric value between the matrices being less than a threshold.

In an embodiment, the first communication node may obtain a channel coefficient by measuring a reference signal sent by the second communication node. In a case where the reference precoding matrix is a right vector matrix of the channel coefficient, the value of the second indicator may be a non-positive number. The channel quality indicated by the channel quality indicator may be a sum of the value of the first indicator and the value of the second indicator.

In an embodiment, assuming that the second communication node uses a right eigenvector of the channel coefficient with a plurality of antennas to transmit a signal or data by the radio channel, the first communication node may calculate the value of the first indicator. The value of the second indicator is a non-positive number. The channel quality indicated by the channel quality indicator is the sum of the value of the first indicator and the value of the second indicator.

In yet another example, there is a correspondence of the similarity metric value between the first matrix and the second matrix to the value of the second indicator. The correspondence may include a monotonically increasing relationship (denoted as Case 1) or a monotonically decreasing relationship (denoted as Case 2).

Case 1: the correspondence of the similarity metric value between the first matrix and the second matrix to the value of the second indicator is a monotonically increasing relationship.

The monotonically increasing may include monotonically increasing linearly, monotonically increasing logarithmically, monotonically increasing exponentially, or monotonically increasing based on a power function.

For example, in a case where the channel quality indicated by the channel quality indicator is equal to the difference between the value of the first indicator and the value of the second indicator, the value of the second indicator is a non-negative number, and the similarity between the first matrix and the second matrix is negatively proportional to the similarity metric value, the correspondence of the value of the second indicator to the similarity metric value between the first matrix and the second matrix is monotonically increasing.

For another example, in a case where the channel quality indicated by the channel quality indicator is equal to the difference between the value of the first indicator and the value of the second indicator, the value of the second indicator is a non-positive number, and the similarity between the first matrix and the second matrix is positively proportional to the similarity metric value, the correspondence of the value of the second indicator to the similarity metric value between the first matrix and the second matrix is monotonically increasing.

In some scenarios, the higher the similarity between the first matrix and the second matrix, the higher the matching degree between the first indicator and the reconstructed precoding matrix of the first communication node. The lower the similarity between the first matrix and the second matrix, the lower the matching degree between the first indicator and the reconstructed precoding matrix of the first communication node. The correspondence of the value of the second indicator to the similarity metric value between the first matrix and the second matrix is monotonically increasing, which may improve the matching degree between the channel quality indicator and the reconstructed precoding matrix of the first communication node.

Case 2: the correspondence of the similarity metric value between the first matrix and the second matrix to the value of the second indicator is a monotonically decreasing relationship.

The monotonically decreasing may include monotonically decreasing linearly, monotonically decreasing logarithmically, monotonically decreasing exponentially, or monotonically decreasing based on a power function.

For example, in a case where the channel quality indicated by the channel quality indicator is equal to the difference between the value of the first indicator and the value of the second indicator, the value of the second indicator is a non-positive number, and the similarity between the first matrix and the second matrix is negatively proportional to the similarity metric value, the correspondence of the second indicator to the similarity metric value between the first matrix and the second matrix is monotonically decreasing.

For another example, in a case where the channel quality indicated by the channel quality indicator is equal to the difference between the value of the first indicator and the value of the second indicator, the value of the second indicator is a non-positive number, and the similarity between the first matrix and the second matrix is positively proportional to the similarity metric value, the correspondence of the second indicator to the similarity metric value between the first matrix and the second matrix is monotonically decreasing.

In some scenarios, the higher the similarity between the first matrix and the second matrix, the lower the matching degree between the first indicator and the reconstructed precoding matrix of the first communication node; the lower the similarity between the first matrix and the second matrix, the higher the matching degree between the first indicator and the reconstructed precoding matrix of the first communication node.

In another example, the method for determining the value of the second indicator according to the similarity metric value between the first matrix and a matrix in a candidate matrix set may include at least one of the following 2-1 to 2-6.

2-1, the value of the second indicator is determined according to a similarity metric value between the first matrix and a first target matrix in the candidate matrix set.

The candidate matrix set may include one or more matrices. The candidate matrix set may be configured by the first communication node by default, or configured by the second communication node or a third communication node, or acquired by the first communication node from the second communication node or a third communication node, which is not limited thereto.

The first target matrix is a matrix with a highest similarity to the first matrix, in the candidate matrix set.

2-2, the value of the second indicator is determined according to a similarity metric value between the first matrix and a second target matrix in the candidate matrix set.

The second target matrix is a matrix with a lowest similarity to the first matrix, in the candidate matrix set.

2-3, the value of the second indicator is determined according to an average value of similarity metric values between the first matrix and matrices in the candidate matrix set.

2-4, the value of the second indicator is determined according to a weighted average value of similarity metric values between the first matrix and matrices in the candidate matrix set.

2-5, the value of the second indicator is determined according to a first metric value.

The first metric value is determined according to a similarity metric value between the first matrix and a matrix in the candidate matrix set. For example, the first metric value is a similarity metric value between a third target matrix in the candidate matrix set and the first matrix. The third target matrix is a matrix with a highest or lowest similarity to the first matrix, in the candidate matrix set. For another example, the first metric value is an average value or a weighted average value of similarity metric values between the first matrix and matrices in the second matrix set.

In an example, the value of the second indicator is determined according to a correspondence of the second indicator to the first metric value. The correspondence may include a linear relationship, a mapping table, a mapping function, etc.

A method for acquiring the correspondence of the second indicator to the first metric value may include: at least one of being indicated by the second communication node, being generated by the second communication node, and being read from a memory by the first communication node.

2-6, the value of the second indicator is determined according to a similarity metric value between the first matrix and a matrix in the candidate matrix set.

The value of the second indicator may be determined according to a similarity metric value between a fourth target matrix of a subset of the candidate matrix set and the first matrix. The fourth target matrix is a matrix with a highest similarity to the first matrix in the subset, or a matrix with a lowest similarity to the first matrix in the subset.

Method 2: the value of the second indicator may be determined according to a candidate value corresponding to the second matrix in the candidate matrix set.

The value of the second indicator may be equal to the candidate value corresponding to the second matrix, or the value of the second indicator may be determined according to the candidate value corresponding to the second matrix and a similarity metric value between the reference precoding matrix and the second matrix, or the value of the second indicator may be determined according to the candidate value corresponding to the second matrix and a first preset value.

In an example, there is a correspondence of the candidate value of the second indicator to the candidate matrix set.

The method for determining the candidate value of the second indicator and the correspondence of the candidate value of the second indicator to the candidate matrix set may include at least one of the following 3-1 to 3-5.

3-1, the first communication node generates the candidate value of the second indicator and the correspondence of the candidate value of the second indicator to the candidate matrix set.

3-2, the first communication node reads, from the memory, the candidate value of the second indicator and the correspondence of the candidate value of the second indicator to the candidate matrix set.

3-3, the second communication node indicates the candidate value of the second indicator and the correspondence of the candidate value of the second indicator to the candidate matrix set.

3-4, the first communication node reads, from the third communication node, the candidate value of the second indicator and the correspondence of the candidate value of the second indicator to the candidate matrix set.

3-5, the second communication node indicates the candidate value of the second indicator, and the second communication node generates the correspondence of the candidate value of the second indicator to the candidate matrix set.

Method 3: the value of the second indicator may be determined according to a candidate value corresponding to a target matrix subset in the candidate matrix set.

The target matrix subset is a subset of the candidate matrix set. A subset may correspond to a group of candidate values. A group of candidate values may include one or more values of the second indicator. For the specific determination method, reference may be made to the description of the embodiments 7 below, which will not be repeated herein.

In an example, a method for determining the value of the second indicator according to the candidate value corresponding to the target matrix subset in the candidate matrix set may include at least one of the following 4-1 to 4-3.

4-1, the value of the second indicator is a candidate value corresponding to the target matrix subset.

4-2, the value of the second indicator is determined according to a candidate value corresponding to the target matrix subset and a second preset value.

For example, the value of the second indicator is a sum of the candidate value corresponding to the target matrix subset and the second preset value.

For another example, the value of the second indicator is a difference between the candidate value corresponding to the target matrix subset and the second preset value.

For another example, the value of the second indicator is a product of the candidate value corresponding to the target matrix subset and the second preset value.

For another example, the value of the second indicator is a quotient between the candidate value corresponding to the target matrix subset and the second preset value.

4-3, the value of the second indicator is determined according to a candidate value corresponding to the target matrix subset, and a similarity metric value between the reference precoding matrix and a matrix in the target matrix subset.

There is a correspondence of the candidate value to the matrix subset of the candidate matrices. The correspondence may be a linear function or a first-order function, etc.

In an example, the first communication node may use the candidate value as an input to determine the second indicator. For example, the first communication node may input the candidate value of the second indicator into a lookup table or a model, to determine the second indicator.

In yet another example, the first communication node may determine the value of the second indicator by using the candidate value, and the similarity metric value between the first matrix and the target matrix subset as inputs. The similarity metric value between the first matrix and the target matrix subset may be determined according to the similarity metric value between the first matrix and a matrix in the target matrix subset. Specifically, reference may be made to the subsequent description of the embodiments (embodiment 8), which will not be repeated herein.

For example, the first communication node may use the candidate value of the second indicator, and the similarity metric value between the first matrix and the target matrix subset, as inputs to a preset formula, to obtain the value of the second indicator.

For example, the preset formula may include at least one of the following formula 5-1 to formula 5-3.

5-1, the value of the second indicator is determined according to a first numerical value and a second numerical value.

The first numerical value is a product of the candidate value of the second indicator and a first coefficient, and the second numerical value is a product of a similarity metric value between the first matrix and the target matrix subset, and a second coefficient.

For example, the value of the second indicator is equal to a sum of the first numerical value and the second numerical value, that is, the preset formula may be: q=ax+by. For another example, the value of the second indicator is equal to a sum of the first numerical value, the second numerical value and a third coefficient, that is, the preset formula may be: q=ax+by+c.

5-2, the value of the second indicator is determined according to the quotient of the candidate value of the second indicator, and the similarity metric value between the first matrix and the target matrix subset.

For example, the value of the second indicator is equal to the quotient of the candidate value of the second indicator, and the similarity metric value between the first matrix and the target matrix subset, that is, the preset formula may be: q=x/y. For another example, the value of the second indicator is equal to a product of, the quotient of the candidate value of the second indicator and the similarity metric value between the first matrix and the target matrix subset, and a coefficient, that is, the preset formula may be: q=ax/y. For another example, the value of the second indicator is equal to a sum of a first product and a coefficient. The first product is the product of, the quotient of the candidate value of the second indicator and the similarity metric value between the first matrix and the target matrix subset, and a coefficient, that is, the preset formula may be: q=ax/y+c.

5-3, the value of the second indicator is determined according to the product of the candidate value of the second indicator, and the similarity metric value between the first matrix and the target matrix subset.

For example, the value of the second indicator is equal to the product of the candidate value of the second indicator, and the similarity metric value between the first matrix and the target matrix subset. For another example, the value of the second indicator is equal to a product of, the product of the candidate value of the second indicator and the similarity metric value between the first matrix and the target matrix subset, and a coefficient, that is, the preset formula may be: q=axy.

The q represents the value of the second indicator, x represents the candidate value of the second indicator, and y represents the similarity metric value between the first matrix and the target matrix subset. The a, b, and c are coefficients.

For another example, the first communication node may determine the second indicator according to a correspondence of q to a value combination of (x, y). For example, the correspondence may be shown in Table 1.

**Table 1**

| Value of q | Value combination of (x, y) |
|---|---|
| Value 1 of q | Value combination 1 |
| Value 2 of q | Value combination 2 |
| Value 3 of q | Value combination 3 |
| Value 4 of q | Value combination 4 |

In an example, in combination with Table 1, the correspondence of q and the value combination of (x, y) may be shown in Table 2, Table 3 or Table 4.

**Table 2**

| q | (x, y) |
|---|---|
| 1 | (0, 1) |
| 2 | (0, 0.9) |
| 1 | (1, 1) |
| 3 | (1, 0.9) |

**Table 3**

| q | (x, y) |
|---|---|
| -1 | (0, 1) |
| -2 | (0, 0.9) |
| -1 | (1, 1) |
| -3 | (1, 0.9) |

**Table 4**

| q | (x, y) |
|---|---|
| 0 | (0, 1) |
| -2 | (0, 0.9) |
| -1 | (1, 1) |
| -3 | (1, 0.9) |

It should be noted that, the data in Table 1 to Table 4 is only exemplary and may include other values and combinations, which is not limited thereto.

**In** yet another example, the correspondence of q and the value combination of (x, y) includes at least one of the following 6-1 to 6-3.

6-1, there is a correspondence of each matrix in the candidate matrix set to q and the value combination of (x, y).

6-2, there is a correspondence of the candidate matrix set to q and the value combination of (x, y).

6-3, there is a correspondence of a subset in the candidate matrix set to q and the value combination of (x, y).

**In** some examples, the above method for determining the similarity metric value between the first matrix and the target matrix subset according to the similarity metric value between the first matrix and a matrix in the target matrix subset includes at least one of the following 7-1 to 7-4.

7-1, the similarity metric value between the first matrix and the target matrix subset is a similarity metric value between the first matrix and a matrix with a highest similarity to the matrix in the target matrix subset.

7-2, the similarity metric value between the first matrix and the target matrix subset is a similarity metric value between the first matrix and a matrix with a lowest similarity to the matrix in the target matrix subset.

7-3, the similarity metric value between the first matrix and the target matrix subset is an average value of similarity metric values between the first matrix and the matrices in the target matrix subset.

7-4, the similarity metric value between the first matrix and the target matrix subset is a weighted average value of similarity metric values between the first matrix and the matrices in the target matrix subset.

Based on this embodiment, the first communication node may flexibly and accurately determine the similarity metric value between the first matrix and the target matrix subset according to the similarity metric value between the first matrix and a matrix of the target matrix subset.

Method 4: the value of the second indicator may be determined according to a similarity metric value between the reference precoding matrix and a matrix in the candidate matrix set.

**In** an example, the method for determining the value of the second indicator according to the similarity metric value between the reference precoding matrix and a matrix in the candidate matrix set may include at least one of the following 8-1 to 8-5.

8-1, the value of the second indicator is determined according to a maximum value of similarity metric values between the reference precoding matrix and matrices in the candidate matrix set.

8-2, the value of the second indicator is determined according to a minimum value of similarity metric values between the reference precoding matrix and matrices in the candidate matrix set.

8-3, the value of the second indicator is determined according to an average value of similarity metric values between the reference precoding matrix and matrices in the candidate matrix set.

8-4, the value of the second indicator is determined according to a weighted average value of similarity metric values between the reference precoding matrix and matrices in the candidate matrix set.

8-5, the value of the second indicator is determined according to a similarity metric value between the reference precoding matrix and a matrix in the target matrix subset.

In an example, in the above 8-5, determining the value of the second indicator according to the similarity metric value between the reference precoding matrix and a matrix in the target matrix subset may include at least one of the following 8-5-1 to 8-5-4.

8-5-1, the value of the second indicator is determined according to a maximum value of similarity metric values between the reference precoding matrix and matrices in the target matrix subset.

8-5-2, the value of the second indicator is determined according to a minimum value of similarity metric values between the reference precoding matrix and matrices in the target matrix subset.

8-5-3, the value of the second indicator is determined according to an average value of similarity metric values between the reference precoding matrix and matrices in the target matrix subset.

8-5-4, the value of the second indicator is determined based on a weighted average value of similarity metric values between the reference precoding matrix and matrices in the target matrix subset.

Method 5: the value of the second indicator is determined according to a candidate value with a correspondence to the second matrix.

In some embodiments, the method for determining the value of the second indicator according to the candidate value with the correspondence to the second matrix includes at least one of the following 9-1 and 9-2.

9-1, the value of the second indicator is determined by using the candidate value as an input.

The value of the second indicator is the candidate value, or the value of the second indicator is a sum, difference, product, or quotient of the candidate value and a second preset value, or the value of the second indicator may be a linear function or a first-order function of the candidate value with the correspondence to the second matrix.

9-2, the second indicator is determined by using the candidate value, and the similarity between the first matrix and the candidate matrix set of the second matrix as inputs. Specifically, reference may be made to the above 5-1 to 5-5 and Table 1 to Table 4, which will not be repeated herein.

Method 6: the second indicator is determined according to a processing method for the reference precoding matrix.

The processing method is used to process information of the reference precoding matrix into information reported to the second communication node.

In an embodiment, the reference precoding matrix is the first matrix, and the first communication node sends information for indicating the first matrix to the second communication node. The information for indicating the first matrix includes that: the first communication node processes the information of the first matrix into the information of the first matrix sent to the second communication node. The second indicator is determined according to the processing method.

In the information for indicating the first matrix sent by the first communication node to the second communication node, the first communication node needs to process the information of the first matrix in the information into the information of the first matrix sent to the second communication node. For example, the information of the first matrix is converted into bit information, the information of the first matrix is compressed into the information sent to the second communication node, and the information of the first matrix is extracted to obtain the information sent to the second communication node.

In an embodiment, the method for determining the value of the second indicator according to the processing method includes at least one of the following 10-1 and 10-2.

10-1, the value of the second indicator is determined according to a number of bits used for the information of the first matrix sent to the second communication node.

10-2, the value of the second identifier is determined according to a model used in the processing of the second communication node.

In an example, the first communication node may determine the second indicator according to the model or information of the model used.

The model has a function of determining a new matrix / information of the new matrix according to an input matrix or information of the input matrix. For example, the model may be a machine learning model, a neural network model, or a multi-layer perception model, etc., which is not limited thereto. The information of the model includes one or more of: an identification number of the model, a function of the model, a number of layers of the model, a number of parameters of the model, an amount of calculation of the model, etc. The models involved in the subsequent embodiments may all refer to the description here.

Based on this embodiment, the first communication node may flexibly and accurately determine the value of the second indicator by a plurality of perspectives.

In the embodiments of the present disclosure, the first communication node may use the first matrix or the second matrix as the reference precoding matrix.

The first matrix may be a right eigenvector of a channel coefficient obtained by the first communication node by measuring a signal.

In an example, in a case where the first matrix is used as the reference precoding matrix, the value of the first indicator may be a non-negative number, and the value of the channel quality indicator may be a difference between the value of the first indicator and the value of the second indicator.

In yet another example, in a case where the first matrix is used as the reference precoding matrix, the value of the second indicator is a non-positive number, and the channel quality indicated by the channel quality indicator is a sum of the value of the first indicator and the value of the second indicator.

In yet another example, in a case where the first matrix is used as the reference precoding matrix, the second matrix may include at least one of the following 11-1 to 11-9.

11-1, a reconstructed precoding matrix.

The reconstructed precoding matrix is a precoding matrix reconstructed based on information of the precoding matrix sent by the second communication node to the first communication node.

11-2, a precoding matrix with a highest similarity to the reconstructed precoding matrix.

11-3, a precoding matrix with a lowest similarity to the reconstructed precoding matrix.

11-4, a precoding matrix with a similarity to the reconstructed precoding matrix higher than a first threshold.

The first value may be set as needed, which is not limited thereto.

11-5, a precoding matrix with a similarity to the reconstructed precoding matrix lower than a second threshold.

The second value may be set as needed, which is not limited thereto.

11-6, a set of first matrices with a similarity to the reconstructed precoding matrix higher than a third threshold.

The third value may be set as needed, which is not limited thereto.

11-7, a subset of a set of first matrices with a similarity to the reconstructed precoding matrix higher than a third threshold.

11- 8, a set of first matrices with a similarity to the reconstructed precoding matrix lower than a fourth threshold.

The fourth value may be set as needed, which is not limited thereto.

11-9, a subset of a set of first matrices with a similarity to the reconstructed precoding matrix lower than a fourth threshold.

Based on this embodiment, the first communication node accurately determines the first matrix and the second matrix by measuring the signal.

In the embodiments of the present disclosure, the method for determining the second matrix may include any one of the following 12-1 to 12-4.

12-1, the second matrix is determined according to a preset calculation method.

The preset calculation method may be configured by the first communication node by default, or may be determined by the first communication node according to a pre-protocol, or may be configured for the first communication node by the second communication node or a third communication node, or may be acquired by the first communication node from the second communication node or a third communication node, which is not limited thereto.

In an example, the preset calculation method may refer to: by using the first matrix or information of the first matrix as an input, acquiring the second matrix in a manner of a lookup table or a model.

For example, the manner of the lookup table may refer to: determining the second matrix according to a lookup result, by looking up a preset table for a matrix or information of the matrix corresponding to the first matrix or the information of the first matrix. For example, if the lookup result is a matrix, the first communication node may use the matrix as the second matrix. If the lookup result is information of a matrix, the first communication node may determine the second matrix according to the information of the matrix. The preset table may include correspondences between a plurality of matrices or correspondences between information of a plurality of matrices.

For another example, acquiring the second matrix in the manner of the model may refer to: inputting the first matrix or information of the first matrix into the model to obtain the second matrix.

12-2, the second matrix is configured by the second communication node or a third communication node.

Being configured by the second communication node or the third communication node may refer to: being indicated by the second communication node or the third communication node to the first communication node, or may refer to: being acquired by the first communication node from the second communication node or the third communication node.

In an example, the second communication node or the third communication node may send indication information to the first communication node. The indication information may be used to indicate the second matrix, or be used to indicate information of the second matrix, or be used to indicate a selection rule for the second matrix, etc. For the selecting rule for the second matrix, reference may be made to the description in 12-4 below, which will not be repeated herein.

12-3, the second matrix is configured by default.

Being configured by default may be described as being pre-configured, or being acquired according to a preset protocol.

12-4, the second matrix is determined from the candidate matrix set.

The candidate matrix set may include one or more matrices. The candidate matrix set may be configured by the first communication node by default, or may be configured for the first communication node by the second communication node or a third communication node, or may be acquired by the first communication node from the second communication node or a third communication node.

In an embodiment, a method for determining the second matrix from the candidate matrix set includes: selecting a matrix with a similarity to the first matrix satisfying a requirement from the candidate matrix set as the matrix (specifically, reference may made to Approach 1); or, determining the second matrix from the candidate matrix set according to information for indicating selection of the second matrix (specifically, reference may made to Approach 2).

The information for indicating the selection of the second matrix includes at least one of: an index of the second matrix, feature information of the second matrix, and a selection rule for the second matrix.

Approach 1, selecting, by the first communication node, a matrix with a similarity to the first matrix satisfying a requirement from the candidate matrix set as the matrix, may include: determining, by the first communication node, according to the similarity between the first matrix and the second matrix.

For example, the first communication node may select a matrix with a highest similarity to the first matrix from the candidate matrix set as the second matrix.

For another example, the first communication node may select a matrix with a lowest similarity to the first matrix from the candidate matrix set as the second matrix.

Approach 2, the selection rule for the second matrix may include a similarity metric value to a specified matrix (for convenience of description, referred to as an indicated similarity metric value) and a range of the similarity metric value to a specified matrix (for convenience of description, referred to as an indicated range).

Based on the selection rule, the second matrix may be a matrix with an indication similarity metric value to the indicated matrix that is closest to the indicated similarity metric value, among the candidate matrices. Alternatively, the second matrix may be a matrix with a similarity metric value to the indicated matrix that is greater than or equal to the indicated similarity metric value, among the candidate matrices. Alternatively, the second matrix may be a matrix with a similarity metric value to the indicated matrix that is less than or equal to the indicated similarity metric value, among the candidate matrices. Alternatively, the second matrix may be a matrix with a similarity metric value to the indicated matrix that is within the indicated range, among the candidate matrices.

The indicated matrix may be the first matrix or other matrices, which is not limited thereto.

Based on this embodiment, the first communication node may accurately and flexibly determine the second matrix from a plurality of perspectives.

In an embodiment, as shown in FIG. 4, the channel quality indication method provided in the embodiments of the present disclosure may further include the following contents.

S401, the first communication node sends information for indicating the first matrix to the second communication node.

The information for indicating the first matrix may be used to expect the second communication node to recover the first matrix. That is, the second communication node is expected to obtain the reconstructed precoding matrix according to the received information for indicating the first matrix. The reconstructed precoding matrix is the first matrix. For example, the information for indicating the first matrix may be the first matrix, information of the first matrix, or information related to the first matrix, etc. The first matrix may be the above-mentioned first matrix.

It should be noted that, in the embodiments of the present disclosure, the first communication node may send information for indicating the first precoding matrix before the above S301, or may send information for indicating the first precoding matrix after the above S301 and before S302, or may synchronously send information for indicating the first precoding matrix and the channel quality indicator to the second communication node.

In a case where the first communication node synchronously sends the information for indicating the first precoding matrix and the channel quality indicator to the second communication node, the information for indicating the first precoding matrix and the channel quality indicator may be encapsulated in a piece of information or different information, which is not limited thereto.

In an embodiment, in a case where the first communication node sends the information of the first matrix to the second communication node, and the reference precoding matrix is the first matrix, the value of the second indicator is a non-negative number. The value of the channel quality indicator is the difference between the value of the first indicator and the value of the second indicator.

In an example, in a case where the first matrix and the reference precoding matrix are the same matrix, the channel quality indicated by the channel quality indicator should decrease along with the value of the first indicator, to obtain the accurate channel quality indicated by the channel quality indicator.

In an embodiment, the first communication node sends the information of the first matrix to the second communication node. It is assumed that the second communication node transmits a signal or data through the radio channel, by using the first matrix based on a plurality of antennas. Based on this assumption, the first communication node calculates the first indicator, the value of the second indicator is a non-negative number, and the channel quality indicated by the channel quality indicator is the difference between the value of the first indicator and the value of the second indicator.

In some other embodiments, in the embodiments of the present disclosure, in a case where the first communication node sends the information of the first matrix to the second communication node, and the first matrix is the reference precoding matrix, the value of the second indicator is a non-positive number, the channel quality indicated by the channel quality indicator is determined according to the sum of the value of the first indicator and the value of the second indicator.

In some other embodiments, in the embodiments of the present disclosure, in a case where the information of the first matrix is sent to the second communication node and the second matrix is the reference precoding matrix, the value of the second indicator is a non-negative number, the channel quality indicated by the channel quality indicator may be determined according to the sum of the value of the first indicator and the value of the second indicator.

For example, the first communication node sends the information of the first matrix to the second communication node, and it is assumed that the second communication node transmits a signal or data through the wireless communication by using the second matrix based on a plurality of antennas. Based on this assumption, the first communication node calculates the first indicator. The second indicator is a non-negative number. The channel quality indicated by the channel quality indicator is the sum of the value of the first indicator and the value of the second indicator.

For another example, the first communication node assumes that the second communication node transmits a signal or data through the radio channel by using the second matrix based on a plurality of antennas. Based on this assumption, the first communication node calculates the first indicator, and sends the information of the first matrix to the second communication node. The value of the second indicator is a non-negative number. The channel quality indicated by the channel quality indicator may be the sum of the value of the first indicator and the value of the second indicator.

In some other embodiments, in the embodiments of the present disclosure, in a case where the first communication node sends the information of the first matrix to the second communication node, and the second matrix is the reference precoding matrix, the value of the second indicator is a non-positive number, the channel quality indicated by the channel quality indicator is determined according to the difference of the value of the first indicator and the value of the second indicator.

For example, the first communication node sends the information of the first matrix to the second communication node, and assumes that the second communication node transmits information or data through the radio channel, by using the second matrix based on a plurality of antennas. Based on this assumption signal, the first communication node calculates the first indicator. The value of the second indicator is a non-positive number. The channel quality indicated by the channel quality indicator is the difference of the value of the first indicator and the value of the second indicator.

For another example, the first communication node assumes that the second communication node transmits a signal or data through the radio channel, by using the second matrix based on a plurality of antennas. Based on this assumption signal, the first communication node calculates the first indicator and sends the information of the first matrix to the second communication node. The value of the second indicator is a non-positive number, and the channel quality indicated by the channel quality indicator is the difference between the value of the first indicator and the value of the second indicator.

S402, the second communication node receives the information for indicating the first matrix from the first communication node.

Based on this embodiment, the second communication node, after receiving the information for indicating the first matrix from the first communication node, may recover the reference precoding matrix from the information, that is, obtain the reconstructed precoding matrix. Based on the reconstructed precoding matrix, the second communication node may accurately determine whether the reconstructed precoding matrix is matched with the reconstructed CQI.

In an embodiment, in the above S301, the implementation of the first communication node sending the channel quality indicator to the second communication node may include that: the first communication node may send the channel quality indicator to the second communication node according to configuration information for the first communication node.

In an example, the first communication node, after receiving the configuration information from the second communication node, may send the channel quality indicator to the second communication node.

In this example, the configuration information may be used to trigger the first communication node to send the channel quality indicator to the second communication node.

It should be noted that, the channel quality indicator may be one that has been generated by the first communication node before receiving the configuration information, or may be generated by the first communication node after receiving the configuration information of the second communication node.

In another example, the first communication node receives the configuration information from the second communication node, the configuration information includes a format used for reporting the channel quality indicator, and the first communication node sends the channel quality indicator to the second communication node according to the format.

In yet another example, the first communication node receives the configuration information from the second communication node, the configuration information includes a radio resource used for reporting the channel quality indicator, and the first communication node sends the channel quality indicator to the second communication node on the radio resource.

In yet another example, the first communication node receives the configuration information from the second communication node, the configuration information includes time for reporting the channel quality indicator, and the first communication node sends the channel quality indicator to the second communication node at the time.

In yet another example, the first communication node receives the configuration information from the second communication node, determines the channel quality indicator according to the configuration information, and sends the channel quality indicator to the second communication node.

The first communication node determines the channel quality indicator according to the configuration information. For example, the first communication node determines a radio channel to be measured or a time-frequency resource occupied by a radio channel to be measured, according to the configuration information, and obtains the channel quality indicator of the radio channel.

The first communication node determines the channel quality indicator according to the configuration information. For example, the first communication node determines a radio channel to be measured or a time-frequency resource occupied by a radio channel to be measured according to the configuration information, to obtain the channel quality indicator of the radio channel associated with the radio channel, or to obtain the channel quality indicator on the time-frequency resource associated with the time-frequency resource occupied by the radio channel.

Based on this embodiment, the first communication node, according to the configuration information sent by the second communication node, may accurately determine according to which radio channel to determine the channel quality indicator, or according to the time-frequency resource occupied by which radio channel to determine the channel quality indicator, to ensure that the second communication node obtains the accurate channel quality indicator.

The various solutions in the above embodiments of the present disclosure may be combined without contradiction.

The embodiments of the present disclosure may divide a channel quality indication apparatus into functional modules or functional units according to the above method examples; for example, various functional modules or functional units may be divided corresponding to various functions, or two or more functions may also be integrated into a processing module. The above integrated module may be implemented in the form of hardware or may be implemented in the form of a software functional module or functional unit. The division of the modules or units in the embodiments of the present disclosure is schematic, which is only a logical functional division, and there may be other divisions in actual implementations.

In a case where various functional modules are divided corresponding to various functions, FIG. 5 shows a structural schematic diagram of a channel quality indication apparatus 50, and the channel quality indication apparatus 50 may be configured to perform the functions involved in the first communication node in the above embodiments. The channel quality indication apparatus 50 shown in FIG. 5 may include: a sending unit 501.

The sending unit 501 is configured to send a channel quality indicator to the second communication node. The channel quality indicator includes a first indicator and a second indicator. The first indicator is used to indicate a channel quality matched with a reference precoding matrix.

In an example, the channel quality indicator satisfies at least one of the following relationships: the channel quality indicated by the channel quality indicator being determined according to a sum of a value of the first indicator and a value of the second indicator; the channel quality indicated by the channel quality indicator being determined according to a difference between a value of the first indicator and a value of the second indicator; the channel quality indicated by the channel quality indicator being determined according to a product of a value of the first indicator and a value of the second indicator; the channel quality indicated by the channel quality indicator being determined according to a quotient of a value of the first indicator and a value of the second indicator; or, the channel quality indicated by the channel quality indicator being determined according to a modulus of a value of the first indicator and a value of the second indicator.

**In** an example, a value of the second indicator is determined according to a similarity metric value between a first matrix and a second matrix, and one of the first matrix and the second matrix is used as the reference precoding matrix.

**In** an example, there is a correspondence of the similarity metric value between the first matrix and the second matrix to the value of the second indicator.

**In** an example, the correspondence of the similarity metric value between the first matrix and the second matrix to the value of the second indicator includes a monotonically increasing relationship or a monotonically decreasing relationship.

**In** an example, determination of the correspondence of the similarity metric value between the first matrix and the second matrix to the value of the second indicator includes at least one of: determining, by the first communication node, the correspondence of the similarity metric value between the first matrix and the second matrix to the value of the second indicator; configuring, by the second communication node or a third communication node, the correspondence of the similarity metric value between the first matrix and the second matrix to the value of the second indicator; or configuring, by default, the correspondence of the similarity metric value between the first matrix and the second matrix to the value of the second indicator.

**In** an example, in a case where the first matrix is used as the reference precoding matrix, the second matrix includes at least one of: a reconstructed precoding matrix, where the reconstructed precoding matrix is a precoding matrix reconstructed based on information of a precoding matrix sent from the first communication node to the second communication node; a precoding matrix with a highest similarity to the reconstructed precoding matrix; a precoding matrix with a lowest similarity to the reconstructed precoding matrix; a precoding matrix with a similarity to the reconstructed precoding matrix higher than a first threshold; or a precoding matrix with a similarity to the reconstructed precoding matrix lower than a second threshold.

**In** an example, determination of the second matrix includes any one of: determining the second matrix according to a preset calculation method; configuring, by the second communication node or a third communication node, the second matrix; configuring, by default, the second matrix; or determining the second matrix from a candidate matrix set.

In an example, determination of the preset calculation method includes any one of: configuring by the second communication node or the second communication node; or, configuring by default.

In an example, the preset calculation method includes any one of: inputting the first matrix or information of the first matrix into a preset lookup table to obtain the second matrix, where the preset lookup table includes a correspondence of a plurality of matrices; or, inputting the first matrix or information of the first matrix into a model to obtain the second matrix.

In an example, determining the second matrix from the candidate matrix set includes: selecting a matrix with a similarity to the first matrix satisfying a requirement as the second matrix, from the candidate matrix set; or determining the second matrix from the candidate matrix set, according to information for indicating selection of the second matrix.

In an example, the information for indicating the selection of the second matrix includes at least one of: an index of the second matrix, feature information of the second matrix, or a selection rule of the second matrix.

In an example, a value of the second indicator is determined according to a candidate value corresponding to a second matrix in a candidate matrix set.

In an example, the value of the second indicator being determined according to the candidate value corresponding to the second matrix in the candidate matrix set, includes any one of: the value of the second indicator being equal to the candidate value corresponding to the second matrix; or the value of the second indicator being determined according to the candidate value corresponding to the second matrix, and a similarity metric value between the reference precoding matrix and the second matrix; or the value of the second indicator being determined according to the candidate value corresponding to the second matrix and a first preset value.

In an example, a value of the second indicator is determined according to a similarity metric value between the reference precoding matrix and a matrix in a candidate matrix set.

In an example, the value of the second indicator being determined according to the similarity metric value between the reference precoding matrix and the matrix in the candidate matrix set, includes at least one of: the value of the second indicator being determined according to a maximum value of similarity metric values between the reference precoding matrix and matrices in the candidate matrix set; the value of the second indicator being determined according to a minimum value of similarity metric values between the reference precoding matrix and matrices in the candidate matrix set; the value of the second indicator being determined according to an average value of similarity metric values between the reference precoding matrix and matrices in the candidate matrix set; the value of the second indicator being determined according to a weighted average value of similarity metric values between the reference precoding matrix and matrices in the candidate matrix set; or the value of the second indicator being determined according to a similarity metric value between the reference precoding matrix and a matrix in a target matrix subset, where the target matrix subset is a subset of the candidate matrix set.

**In** an example, the value of the second indicator being determined according to the similarity metric value between the reference precoding matrix and the matrix in the target matrix subset, includes at least one of: the value of the second indicator being determined according to a maximum value of similarity metric values between the reference precoding matrix and matrices in the target matrix subset; the value of the second indicator being determined according to a minimum value of similarity metric values between the reference precoding matrix and matrices in the target matrix subset; the value of the second indicator being determined according to an average value of similarity metric values between the reference precoding matrix and matrices in the target matrix subset; or, the value of the second indicator being determined according to a weighted average value of similarity metric values between the reference precoding matrix and matrices in the target matrix subset.

In an example, a value of the second indicator is determined according to a candidate value corresponding to a target matrix subset in a candidate matrix set.

In an example, the value of the second indicator is the candidate value corresponding to the target matrix subset; the value of the second indicator is determined according to the candidate value corresponding to the target matrix subset and a second preset value; or the value of the second indicator is determined according to the candidate value corresponding to the target matrix subset, and a similarity metric value between the reference precoding matrix and a matrix in the target matrix subset.

In an example, a value of the second indicator is determined according to a processing method for the reference precoding matrix; the processing method is used to process information of the reference precoding matrix into information reported to the second communication node.

In an example, in a case where information of the first matrix is sent to the second communication node and the first matrix is the reference precoding matrix, the value of the second indicator is a non-negative number, and the channel quality indicated by the channel quality indicator is determined according to a difference between a value of the first indicator and the value of the second indicator.

In an example, in a case where information of the first matrix is sent to the second communication node and the first matrix is the reference precoding matrix, the value of the second indicator is a non-positive number, and the channel quality indicated by the channel quality indicator is determined according to a sum between a value of the first indicator and the value of the second indicator.

In an example, in a case where information of the first matrix is sent to the second communication node and the second matrix is the reference precoding matrix, the value of the second indicator is a non-negative number, and the channel quality indicated by the channel quality indicator is determined according to a sum between a value of the first indicator and the value of the second indicator.

In an example, in a case where information of the first matrix is sent to the second communication node and the second matrix is the reference precoding matrix, the value of the second indicator is a non-positive number, and the channel quality indicated by the channel quality indicator is determined according to a difference between a value of the first indicator and the value of the second indicator.

In an example, the first matrix is a right eigenvector of a channel coefficient obtained by the first communication node by measuring a reference signal.

As another implementation, the sending unit 501 in FIG. 5 may be replaced by a communication interface, and the communication interface may integrate the functions of the sending unit 501.

Furthermore, when the sending unit 501 is replaced by a processor, the channel quality indication apparatus 50 involved in the embodiments of the present disclosure may be the channel quality indication apparatus shown in FIG. 2.

In a case where various functional modules are divided corresponding to various functions, FIG. 6 shows a structural schematic diagram of a channel quality indication apparatus 60, and the channel quality indication apparatus 60 may be configured to perform the functions involved in the second communication node in the above embodiments. The channel quality indication apparatus 60 shown in FIG. 6 may include: a receiving unit 601.

The receiving unit 601, is configured to receive a channel quality indicator from a first communication node, where the channel quality indicator includes a first indicator and a second indicator, where the first indicator is used to indicate a channel quality matched with a reference precoding matrix.

In an example, the channel quality indicator satisfies at least one of the following relationships: the channel quality indicated by the channel quality indicator being determined according to a sum of a value of the first indicator and a value of the second indicator; the channel quality indicated by the channel quality indicator being determined according to a difference between a value of the first indicator and a value of the second indicator; the channel quality indicated by the channel quality indicator being determined according to a product of a value of the first indicator and a value of the second indicator; the channel quality indicated by the channel quality indicator being determined according to a quotient of a value of the first indicator and a value of the second indicator; or, the channel quality indicated by the channel quality indicator being determined according to a modulus of a value of the first indicator and a value of the second indicator.

In an example, a value of the second indicator is determined according to a similarity metric value between a first matrix and a second matrix, and one of the first matrix and the second matrix is used as the reference precoding matrix.

In an example, there is a correspondence of the similarity metric value between the first matrix and the second matrix to the value of the second indicator.

In an example, the correspondence of the similarity metric value between the first matrix and the second matrix to the value of the second indicator includes a monotonically increasing relationship or a monotonically decreasing relationship.

In an example, determination of the correspondence of the similarity metric value between the first matrix and the second matrix to the value of the second indicator includes at least one of: determining, by the first communication node, the correspondence of the similarity metric value between the first matrix and the second matrix to the value of the second indicator; configuring, by the second communication node or a third communication node, the correspondence of the similarity metric value between the first matrix and the second matrix to the value of the second indicator; or configuring, by default, the correspondence of the similarity metric value between the first matrix and the second matrix to the value of the second indicator.

In an example, the second matrix includes at least one of: a reconstructed precoding matrix, where the reconstructed precoding matrix is a precoding matrix reconstructed based on information of a precoding matrix from the first communication node; a precoding matrix with a highest similarity to the reconstructed precoding matrix; a precoding matrix with a lowest similarity to the reconstructed precoding matrix; a precoding matrix with a similarity to the reconstructed precoding matrix higher than a first threshold; or a precoding matrix with a similarity to the reconstructed precoding matrix lower than a second threshold.

In an example, determination of the second matrix includes any one of: determining the second matrix according to a preset calculation method; configuring, by the second communication node or a third communication node, the second matrix; configuring, by default, the second matrix; or determining the second matrix from a candidate matrix set.

In an example, determination of the preset calculation method includes: configuring by the second communication node or the second communication node; or, configuring by default.

In an example, the preset calculation method includes: inputting the first matrix or information of the first matrix into a preset lookup table to obtain the second matrix, where the preset lookup table includes a correspondence of a plurality of matrices; or, inputting the first matrix or information of the first matrix into a model to obtain the second matrix.

In an example, determining, by the first communication node, the second matrix from the candidate matrix set, includes: selecting, by the first communication node, a matrix with a similarity to the first matrix satisfying a requirement as the second matrix, from the candidate matrix set; or determining, by the first communication node, the second matrix from the candidate matrix set, according to information for indicating selection of the second matrix.

In an example, the information for indicating the selection of the second matrix includes at least one of: an index of the second matrix, feature information of the second matrix, and a selection rule of the second matrix.

In an example, a value of the second indicator is determined according to a candidate value corresponding to a second matrix in a candidate matrix set.

In an example, the value of the second indicator being determined according to the candidate value corresponding to the second matrix in the candidate matrix set, includes any one of: the value of the second indicator being equal to the candidate value corresponding to the second matrix; or the value of the second indicator being determined according to the candidate value corresponding to the second matrix, and a similarity metric value between the reference precoding matrix and the second matrix; or the value of the second indicator being determined according to the candidate value corresponding to the second matrix and a first preset value.

In an example, a value of the second indicator is determined according to a similarity metric value between the reference precoding matrix and a matrix in a candidate matrix set.

In an example, the value of the second indicator being determined according to the similarity metric value between the reference precoding matrix and the matrix in the candidate matrix set, includes at least one of: the value of the second indicator being determined according to a maximum value of similarity metric values between the reference precoding matrix and matrices in the candidate matrix set; the value of the second indicator being determined according to a minimum value of similarity metric values between the reference precoding matrix and matrices in the candidate matrix set; the value of the second indicator being determined according to an average value of similarity metric values between the reference precoding matrix and matrices in the candidate matrix set; the value of the second indicator being determined according to a weighted average value of similarity metric values between the reference precoding matrix and matrices in the candidate matrix set; or the value of the second indicator being determined according to a similarity metric value between the reference precoding matrix and a matrix in a target matrix subset, where the target matrix subset is a subset of the candidate matrix set.

In an example, the value of the second indicator being determined according to the similarity metric value between the reference precoding matrix and the matrix in the target matrix subset, includes at least one of: the value of the second indicator being determined according to a maximum value of similarity metric values between the reference precoding matrix and matrices in the target matrix subset; the value of the second indicator being determined according to a minimum value of similarity metric values between the reference precoding matrix and matrices in the target matrix subset; the value of the second indicator being determined according to an average value of similarity metric values between the reference precoding matrix and matrices in the target matrix subset; or, the value of the second indicator being determined according to a weighted average value of similarity metric values between the reference precoding matrix and matrices in the target matrix subset.

In an example, a value of the second indicator is determined according to a candidate value corresponding to a target matrix subset in a candidate matrix set.

In an example, the value of the second indicator is the candidate value corresponding to the target matrix subset; or the value of the second indicator is determined according to the candidate value corresponding to the target matrix subset and a second preset value; or the value of the second indicator is determined according to the candidate value corresponding to the target matrix subset, and a similarity metric value between the reference precoding matrix and a matrix in the target matrix subset.

In an example, a value of the second indicator is determined according to a processing method for the reference precoding matrix; the processing method is used to process information of the reference precoding matrix into information reported by the first communication node to the second communication node.

In an example, in a case where information of the first matrix is sent by the first communication node to the second communication node and the first matrix is the reference precoding matrix, the value of the second indicator is a non-negative number, and the channel quality indicated by the channel quality indicator is determined according to a difference between a value of the first indicator and the value of the second indicator.

In an example, in a case where information of the first matrix is sent by the first communication node to the second communication node and the first matrix is the reference precoding matrix, the value of the second indicator is a non-positive number, and the channel quality indicated by the channel quality indicator is determined according to a sum between a value of the first indicator and the value of the second indicator.

In an example, in a case where information of the first matrix is sent by the first communication node to the second communication node and the second matrix is the reference precoding matrix, the value of the second indicator is a non-negative number, and the channel quality indicated by the channel quality indicator is determined according to a sum between a value of the first indicator and the value of the second indicator.

In an example, in a case where information of the first matrix is sent by the first communication node to the second communication node and the second matrix is the reference precoding matrix, the value of the second indicator is a non-positive number, and the channel quality indicated by the channel quality indicator is determined according to a difference between a value of the first indicator and the value of the second indicator.

In an example, the first matrix is a right eigenvector of a channel coefficient obtained by the first communication node by measuring a reference signal.

As another implementation, the receiving unit 601 in FIG. 6 may be replaced by a communication interface, and the communication interface may integrate the functions of the receiving unit 601.

Furthermore, in an example, when replaced by the communication interface, the channel quality indication apparatus 60 involved in the embodiments of the present disclosure may be the channel quality indication apparatus shown in FIG. 2.

The embodiments of the present disclosure further provide a computer readable storage medium. All or a part of the procedures in the method embodiments mentioned above may be completed by related hardware instructed by a computer program. The program may be stored in above-mentioned computer readable storage medium. The program, when executed, may include procedures of the various method embodiments described above. The computer readable storage medium may be an internal storage unit of the channel quality indication apparatus (including the data sending end and/or the data receiving end) of any one of the aforementioned embodiments, such as a hard disk or a memory of the channel quality indication apparatus. The above-mentioned computer readable storage medium may also be an external storage device of the above-mentioned terminal apparatus, such as a plug-in hard disk, a smart memory card (smart media card, SMC), a secure digital (SD) card, a flash card, etc., equipped on the above-mentioned terminal apparatus. Furthermore, the above-mentioned computer readable storage medium may also include both an internal storage unit and an external storage device of the above-mentioned channel quality indication apparatus. The above-mentioned computer readable storage medium is used to store the above-mentioned computer program, and other programs and data required for the above-mentioned channel quality indication apparatus. The above-mentioned computer readable storage medium may also be used to temporarily store data that has been output or is to be output. The above-mentioned computer readable storage medium includes a non-transitory computer readable storage medium.

It should be noted that, the terms such as "first" and "second", etc., in the description and claims and the drawings of the present disclosure are used for distinguishing different objects, but not used for describing a specific order. Furthermore, the terms "comprise/include/contain" and "have" and any derivations thereof are intended to cover non-exclusive inclusion. For example, a process, method, system, product or device that contains a series of steps or units is not limited to the listed steps or units, but optionally also includes steps or units that are not listed, or optionally also includes other steps or units inherent to the process, method, product or device.

From the description of the above implementations, those skilled in the art may clearly understand that, for convenience and brevity of description, the division of the above-mentioned various functional modules is illustrated only by way of an example, and in actual applications, the above-mentioned functions may be allocated to be completed by different functional modules as needed, that is, an internal structure of the apparatus is divided into different functional modules to complete all or a part of the functions mentioned above.

In several embodiments provided in the present disclosure, it should be understood that, the disclosed apparatuses and methods may be implemented in other ways. For example, the apparatus embodiments described above are merely exemplary, for example, the division of the modules or units is only a logical functional division, and there may be other divisions in actual implementations; for example, a plurality of units or components may be combined or integrated into another apparatus, or some features may be ignored or not performed. On the other hand, the mutual coupling or direct coupling or communication connection shown or discussed may be an indirect coupling or communication connection by some interfaces, apparatuses or units, and may be electrical, mechanical or in other forms.

The units described as separate components may be or may not be physically separated, and the component shown as the unit may be a physical unit or a plurality of physical units, that is, it may be located in a place, or may be distributed to a plurality of different places. A part or all of the units may be selected according to actual needs to achieve the purposes of the solutions in the embodiments.

In addition, the various functional units in the various embodiments of the present disclosure may be integrated into a processing unit, or the various units may exist separately and physically, or two or more units may be integrated into a unit. The above-mentioned integrated unit may be implemented in the form of hardware or may be implemented in the form of a software functional unit.

If the integrated unit is implemented in the form of a software functional unit, and sold or used as an independent product, the integrated unit may be stored in a readable storage medium. Based on this understanding, the technical solutions of the embodiments of the present disclosure may be essentially, or a part of the technical solutions that contributes to the existing technology, or a part of all of the technical solutions, may be embodied in the form of a software product, and the software product is stored in a storage medium, and includes a plurality of instructions to cause a device (which may be a single-chip, a chip, etc.) or processor to perform a part or all of the steps of the methods of various embodiments of the present disclosure. The aforementioned storage media includes various types of medium capable of storing program codes, such as: a U disk (USB flash disk), a mobile hard disk, a read-only memory (ROM), a random access memory (RAM), a magnetic disk or an optical disk, etc.

The aforementioned descriptions are merely specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

## Claims

1. A channel quality indication method, **characterized in that** the method is applied to a first communication node, and the method comprises:
sending a channel quality indicator to a second communication node, wherein the channel quality indicator comprises a first indicator and a second indicator, and the first indicator is used to indicate a channel quality matched with a reference precoding matrix.

2. The method according to claim 1, wherein a value of the second indicator is determined according to a similarity metric value between a first matrix and a second matrix, and one of the first matrix and the second matrix is used as the reference precoding matrix.

3. The method according to claim 2, wherein there is a correspondence of the similarity metric value between the first matrix and the second matrix to the value of the second indicator.

4. The method according to claim 3, wherein the correspondence of the similarity metric value between the first matrix and the second matrix to the value of the second indicator comprises a monotonically increasing relationship or a monotonically decreasing relationship.

5. The method according to claim 3, wherein determination of the correspondence of the similarity metric value between the first matrix and the second matrix to the value of the second indicator comprises at least one of:
determining, by the first communication node, the correspondence of the similarity metric value between the first matrix and the second matrix to the value of the second indicator;
configuring, by the second communication node or a third communication node, the correspondence of the similarity metric value between the first matrix and the second matrix to the value of the second indicator; or
configuring, by default, the correspondence of the similarity metric value between the first matrix and the second matrix to the value of the second indicator.

6. The method according to claim 2, wherein in a case where the first matrix is used as the reference precoding matrix, the second matrix comprises at least one of:
a reconstructed precoding matrix, wherein the reconstructed precoding matrix is a precoding matrix reconstructed based on information of a precoding matrix sent from the first communication node to the second communication node;
a precoding matrix with a highest similarity to the reconstructed precoding matrix, among candidate matrices;
a precoding matrix with a lowest similarity to the reconstructed precoding matrix, among candidate matrices;
a precoding matrix with a similarity to the reconstructed precoding matrix higher than a first threshold, among candidate matrices; or
a precoding matrix with a similarity to the reconstructed precoding matrix lower than a second threshold, among candidate matrices.

7. The method according to claim 2, wherein determination of the second matrix comprises at least one of:
determining the second matrix according to a preset calculation method;
configuring, by the second communication node or a third communication node, the second matrix;
configuring, by default, the second matrix; or
determining the second matrix from a candidate matrix set.

8. The method according to claim 7, wherein determining the second matrix from the candidate matrix set, comprises:
selecting a matrix with a similarity to the first matrix satisfying a requirement as the second matrix, from the candidate matrix set; or
determining the second matrix from the candidate matrix set, according to information for indicating selection of the second matrix.

9. The method according to claim 8, wherein the information for indicating the selection of the second matrix comprises at least one of: an index of the second matrix, feature information of the second matrix, or a selection rule of the second matrix.

10. The method according to claim 1, wherein a value of the second indicator is determined according to a candidate value corresponding to a second matrix in a candidate matrix set.

11. The method according to claim 10, wherein the value of the second indicator being determined according to the candidate value corresponding to the second matrix in the candidate matrix set, comprises any one of:
the value of the second indicator being equal to the candidate value corresponding to the second matrix; or
the value of the second indicator being determined according to the candidate value corresponding to the second matrix, and a similarity metric value between the reference precoding matrix and the second matrix; or
the value of the second indicator being determined according to the candidate value corresponding to the second matrix and a first preset value.

12. The method according to claim 1, wherein a value of the second indicator is determined according to a similarity metric value between the reference precoding matrix and a matrix in a candidate matrix set.

13. The method according to claim 12, wherein the value of the second indicator being determined according to the similarity metric value between the reference precoding matrix and the matrix in the candidate matrix set, comprises at least one of:
the value of the second indicator being determined according to a maximum value of similarity metric values between the reference precoding matrix and matrices in the candidate matrix set;
the value of the second indicator being determined according to a minimum value of similarity metric values between the reference precoding matrix and matrices in the candidate matrix set;
the value of the second indicator being determined according to an average value of similarity metric values between the reference precoding matrix and matrices in the candidate matrix set;
the value of the second indicator being determined according to a weighted average value of similarity metric values between the reference precoding matrix and matrices in the candidate matrix set; or
the value of the second indicator being determined according to a similarity metric value between the reference precoding matrix and a matrix in a target matrix subset, wherein the target matrix subset is a subset of the candidate matrix set.

14. The method according to claim 1, wherein a value of the second indicator is determined according to a candidate value corresponding to a target matrix subset in a candidate matrix set.

15. The method according to claim 14, wherein
the value of the second indicator is the candidate value corresponding to the target matrix subset;
the value of the second indicator is determined according to the candidate value corresponding to the target matrix subset and a second preset value; or
the value of the second indicator is determined according to the candidate value corresponding to the target matrix subset, and a similarity metric value between the reference precoding matrix and a matrix in the target matrix subset.

16. The method according to claim 1, wherein a value of the second indicator is determined according to a processing method for the reference precoding matrix; the processing method is used to process information of the reference precoding matrix into information reported to the second communication node.

17. The method according to claim 2, wherein in a case where information of the first matrix is sent to the second communication node and the first matrix is the reference precoding matrix, the value of the second indicator is a non-negative number, and the channel quality indicated by the channel quality indicator is determined according to a difference between a value of the first indicator and the value of the second indicator.

18. The method according to claim 2, wherein in a case where information of the first matrix is sent to the second communication node and the first matrix is the reference precoding matrix, the value of the second indicator is a non-positive number, and the channel quality indicated by the channel quality indicator is determined according to a sum between a value of the first indicator and the value of the second indicator.

19. The method according to claim 2, wherein in a case where information of the first matrix is sent to the second communication node and the second matrix is the reference precoding matrix, the value of the second indicator is a non-negative number, and the channel quality indicated by the channel quality indicator is determined according to a sum between a value of the first indicator and the value of the second indicator.

20. The method according to claim 2, wherein in a case where information of the first matrix is sent to the second communication node and the second matrix is the reference precoding matrix, the value of the second indicator is a non-positive number, and the channel quality indicated by the channel quality indicator is determined according to a difference between a value of the first indicator and the value of the second indicator.

21. The method according to any one of claims 17 to 20, wherein the first matrix is a right eigenvector of a channel coefficient obtained by the first communication node by measuring a reference signal.

22. A channel quality indication method, **characterized in that** the method is applied to a second communication node, and the method comprises:
receiving a channel quality indicator from a first communication node, wherein the channel quality indicator comprises a first indicator and a second indicator, wherein the first indicator is used to indicate a channel quality matched with a reference precoding matrix.

23. The method according to claim 22, wherein a value of the second indicator is determined according to a similarity metric value between a first matrix and a second matrix, and one of the first matrix and the second matrix is used as the reference precoding matrix.

24. The method according to claim 23, wherein the value of the second indicator is determined according to a similarity metric value between the reference precoding matrix and a matrix in a candidate matrix set.

25. A first communication node, **characterized in that** the first communication node comprises a processor, the processor is configured to send a channel quality indicator to a second communication node, wherein the channel quality indicator comprises a first indicator and a second indicator, and the first indicator is used to indicate a channel quality matched with a reference precoding matrix.

26. A second communication node, **characterized in that** the second communication node comprises a processor, the processor is configured to receive a channel quality indicator from a first communication node, wherein the channel quality indicator comprises a first indicator and a second indicator, and the first indicator is used to indicate a channel quality matched with a reference precoding matrix.

27. A computer readable storage medium, **characterized in that** the computer readable storage medium comprises computer instructions;
wherein when the computer instructions are executed, the channel quality indication method according to any one of claims 1 to 21 or according to any one of claims 22 to 24 is implemented.
